**Europäisches Patentamt**

**European Patent Office**

**Office européen des brevets**

(19)

(11) Veröffentlichungsnummer: **0 017 220 B1**

# EUROPÄISCHE PATENTSCHRIFT

(12)

(45) Veröffentlichungstag der Patentschrift:
06.06.84

(51) Int. Cl.³: **B 28 B 21/72, C 04 B 31/04**

(21) Anmeldenummer: **80101758.3**

(22) Anmeldetag: **02.04.80**

(54) Verfahren zum Beschichten eines Rohres mit einer hydraulisch abbindenden Masse.

(30) Priorität: **10.04.79 DE 2914410**

(43) Veröffentlichungstag der Anmeldung:
**15.10.80 Patentblatt 80/21**

(45) Bekanntmachung des Hinweises auf die Patenterteilung:
**06.06.84 Patentblatt 84/23**

(84) Benannte Vertragsstaaten:
**AT BE CH DE FR GB IT LI LU NL SE**

(56) Entgegenhaltungen:
**DE - A - 2 212 117**
**DE - A - 2 511 097**
**DE - A - 2 518 799**
**DE - A - 2 740 291**
**DE - B - 2 439 502**
**DE - B - 2 620 669**
**DE - U - 7 821 842**
**GB - A - 1 494 800**

(73) Patentinhaber: **Heidelberger Zement AG, Berliner Strasse 6, D-6900 Heidelberg (DE)**

(72) Erfinder: **Meyer, Adolf, Prof. Dr. Ing., Hainbuchenweg 8, D-6906 Leimen-Lingental (DE)**

(74) Vertreter: **Schulze, Ilse, Dipl.-Chem., Patenanwälte Dipl.-Chem. I. Schulze Dipl.-Ing. E. Gutscher Gaisbergstrasse 3, D-6900 Heidelberg (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**0 017 220**

## Beschreibung

Die Erfindung betrifft ein Verfahren zum Beschichten und Ummanteln eines Rohres mit einer hydraulisch abbindenden Masse mit Hilfe eines Bandes.

Die Beschichtung und Ummantelung von starren Körpern, vorzugsweise von Rohren aus Eisen oder Stahl mit korrosionsbeständigen Massen ist ein wichtiges und breitstreuendes Gebiet, da in nahezu allen Industriezweigen, bei Installationen, Rohrverlegungen im Boden und ähnlichen Anwendungsgebieten stabile und gegen äußere Einflüsse sehr widerstandsfähige und korrosionsbeständige Rohre benötigt werden. Hydraulisch abbindende Massen sind ein ausgezeichnetes Material für solche Beschichtungen und Ummantelungen, da sie einwandfrei korrosionsbeständig, abrieb- und frostbeständig und gegen äußere Einflüsse widerstandsfähig sind und eine gute Schlag- und Druckfestigkeit aufweisen und verleihen.

Aus »Pipeline and Gas Journal«, Mai 1975, Seite 76, ist eine Beschichtungsmasse aus stahlfaserbewehrtem Beton bekannt. Die Beschichtung wirkt in erster Linie zur Beschwerung des Rohres, die ein Aufschwimmen der Pipeline verhindern soll. Darüber hinaus wirkt sie als mechanischer Schutz für das Rohr. Die Stahlfaserbewehren soll die Druckfestigkeit des Betonmantels für Anwendung in größeren Wassertiefen verbessern und dem Beton die nötige Zähigkeit verleihen, um ein Abtragen oder Herausbrechen größerer Mantelstücke zu verhindern. Die Beschichtung aus Stahlfaserbeton ist jedoch kein dauerhafter Korrosionsschutz.

Fertigungstechnisch ist man seit mehreren Jahren dazu übergegangen, hydraulisch abbindende Massen, insbesondere Beton, durch Spritzen auf Eisen- oder Stahlrohre aufzubringen. Dieses bekannte Verfahren weist eine Reihe von Nachteilen auf. So muß das Rohr zunächst durch Sandstrahlen vorbereitet werden, um eine ausreichende Haftung der Beschichtungsmasse sicherzustellen und ein Abrutschen der aufgespritzten Masse zu verhindern. Dadurch wird ein kostspieliger zusätzlicher Arbeitsgang erforderlich, der aber dennoch nicht in jedem Fall eine sichere Haftung der Beton-Ummantelung auf dem Metall gewährleistet. Hinzu kommt, daß beim Spritzen ein erheblicher Rückprall und dadurch Materialverlust auftritt. Die Oberfläche ist rauh und die Beschichtung unterschiedlich dick. Die Rohre können erst gestapelt werden, wenn die Betonbeschichtung vollständig oder zumindest weitgehend erhärtet ist. Schließlich kann beim Aufspritzen der Masse nicht so sorgfältig gearbeitet werden, daß die Ummantelung in allen Teilen eine im wesentlichen gleichmäßige Schichtdicke aufweist. Aus der DE-B2-2 439 502 ist ein Verfahren zur Herstellung von Verbundrohren bekannt, bei welchem ein vorgefertigtes Kernrohr koaxial durch eine Form mit größerem Innendurchmesser hindurchgeführt wird. In einem das Kernrohr koaxial umschließenden Ringraum wird Zementmörtel eingeführt und im Ringraum zu einer das Kernrohr umschließenden Zementmörtelschicht verformt. Zwischen der Innenfläche des das Kernrohr umschließenden, koaxial rotierenden Rohrkörpers und die Zementmörtelschicht wird ein bandartiges Material schräg zur Längsachse des Rohrkörpers eingeführt und schraubenförmig auf die von der Innenfläche umschlossene Zementmörtelschicht aufgewickelt.

Abgesehen davon, daß bei diesem bekannten Verfahren eine aufwendige Anlage erforderlich ist, dient hier das Band nicht zum Zuführen des Zementmörtels, sondern lediglich zum Umhüllen der Beschichtung. Dabei sollen am Band angeordnete Abstandhalter (a) ein Herauspressen von Zementmörtel zwischen Kanten benachbarter Windungen des Bandes verhindern, (b) Ungleichmäßigkeiten der Schichtdicke infolge Abweichungen in der Zugspannung des Bandes verhüten und (c) ein Abwärtsfließen durch Eigengewicht des Zementmörtels während des Verfestigens zu unterbinden.

Es wurde gefunden, daß auch bei sorgfältigem Arbeiten die bisher verwendeten hydraulisch abbindenden Massen nicht die gewünschten zufriedenstellenden Beschichtungen ergeben, da nicht nur ihr Aufbringen mit Schwierigkeiten verbunden ist, sondern sie an sich schlecht haften und außerdem zu Makrorissen neigen. Diese beeinträchtigen aber den Korrosionsschutz, da hier Schadstoffe eindringen und auf den Metallmantel des beschichteten Rohres treffen können.

Aufgabe der Erfindung ist es, ein Verfahren zum Beschichten und Ummanteln eines Rohres mit einer hydraulisch abbindenden Masse zu schaffen, bei dem mit einer relativ einfachen Vorrichtung eine dauerhafte, fest haftende Beschichtung eines Rohres möglich ist, wobei die Masse ohne besondere Vorbehandlung der zu beschichtenden Oberfläche schnell und im wesentlichen in gleichmäßiger Dicke auf den Körper aufgebracht werden kann und hydraulisch abbindende Massen verwendet werden können, die nach dem Erhärten im wesentlichen rißfrei sind, keinerlei Makrorißbildung aufweisen, auch in dünnen Schichten auftragbar sind und einen guten Korrosionsschutz gewährleistet.

Diese Aufgabe wird durch ein Verfahren der eingangs genannten Art dadurch gelöst, daß man die noch nicht abgebundene Masse aus rasch härtendem Zement, alkaliwiderstandsfähigen Mineralfasern in Form von Schnitzeln sowie Zuschlägen und gegebenenfalls Zusatzmitteln, maßgerecht durch einen Aufgabetrichter unmittelbar vor dem zu ummantelnden, sich drehenden Rohr auf das Band aufbringt und mit dem gespannten Band um das Rohr wickelt und andrückt.

Vorteilhafte Weiterbildungen des Verfahrens sind in den Unteransprüchen gekennzeichnet.

Die Fasern sind zweckmäßig und vorzugsweise Glasfasern. Die Verwendung von Kohlenstoff-Fasern oder Asbestfasern ist ebenso möglich.

Die Zusatzmittel dienen zur Verbesserung der Haftung an dem zu beschichtenden Körper sowie

2

gegebenenfalls an vorhandenen organischen Zwischenschichten. Es können auch Zusatzmittel zugegeben werden, die den Wasseranspruch senken. Die Masse kann ferner Kunstharzdispersionen enthalten. Als Bindemittel eignet sich insbesondere ein als modifizierter Portlandzement hergestellter Schnellzement, der neben anderen Phasen noch $C_{11}A_7 \cdot CaF_2$ enthält. Außerdem kann als hydraulisches Bindemittel Portlandzement mit beschleunigenden Zusätzen verwendet werden.

Die hydraulisch abbindende Masse kann ferner eine oder mehrere Zwischenlagen aus Kunststoffen mit oder ohne Faserverstärkung enthalten, die mit hydraulisch abbindenden Schichten abwechseln. Sie kann schließlich mit organischen Stoffen, ebenfalls mit oder ohne Faserverstärkung, oberflächlich beschichtet sein, wobei diese Oberflächenschicht so aufgebracht sein kann, daß sie ablösbar ist.

Das erfindungsgemäße Verfahren eignet sich in ausgezeichneter Weise zum Beschichten und Ummanteln von Rohren aus Stahl, Gußeisen, Beton, Asbestzement, Steingut oder Kunststoff mit der beschriebenen Beschichtungsmasse. Mit dieser wird erstmals eine haftende, korrosionsverhindernde Beschichtung auf der Grundlage einer hydraulisch abbindenden Matrix geschaffen, die auch mit geringer Schichtdicke auf einen starren Kern aufgetragen werden kann und dabei auch nach dem Erhärten die für eine solche Beschichtung gewünschten Eigenschaften in optimaler Weise beibehält. Die Masse ist im frischen Zustand ein filzartiges Gebilde, das sich mit ausgezeichneter Haftung an den zu beschichtenden Kern anlegt und einen hohen inneren Zusammenhang aufweist. Bereits bei einer Schichtdicke im Millimeterbereich bietet sie einen vollen Korrosionsschutz für den ummantelten bzw. beschichteten Kern. Die Beschichtungsmasse kann die bislang übliche Verzinkung oder Kunststoffbeschichtung von Stahlkernen überflüssig machen.

Die Mineralfasern, wie Glasfasern, Kohlenstoff-Fasern oder Asbestfasern, bilden eine Mikrobewehrung in der Beschichtungsmasse. Die Faserdurchmesser liegen in der Größenordnung von etwa 10 µm und entsprechen damit der Größe der Hydratationsprodukte beim Aushärten der Masse. Durch diese Mikrobewehrung werden schädliche Risse verhindert. Eventuell entstehende Mikrorisse beeinträchtigen den Korrosionsschutz nicht. Mikrorisse sind außerdem in einer solchen Masse, in der ein Überschuß an Zement vorhanden ist, der Selbstheilung zugänglich.

Das zu ummantelnde Rohr kann einen runden oder ovalen Querschnitt aufweisen. Es wird um eine parallel zu seiner zu ummantelnden Fläche angeordnete horizontale Achse gedreht und die noch nicht abgebundene Masse wird von einem Band mitgenommen und damit auf den sich drehenden Körper gewickelt und angedrückt.

Das Band dient gleichzeitig als äußere Schalung bzw. als Formwand für die Masse der Ummantelung, wobei die Schalung oder Formwand auf dem beschichteten Körper verbleiben, also verloren sein kann, oder sie kann abgelöst werden. Das Band besteht vorzugsweise aus einem impermeablen Material, das zudem zur Erhöhung der Zugfestigkeit und der Schlagzähigkeit durch Fasern, zweckmäßig alkalibeständige und/oder hochfeste Fasern, verstärkt sein kann. Die hydraulisch abbindende Masse kann besonders klebfähig eingestellt werden.

Die hydraulisch abbindende Masse kann mit den einfachen erfindungsgemäßen Verfahrensschritten sicher und einwandfrei auf den zu beschichteten Körper aufgebracht werden. Dabei werden alle Vorteile beispielweise eines Eisen- oder Stahlrohres mit den Vorteilen einer Beschichtung aus hydraulisch abbindenden bzw. gehärteten oder abgebundenen Massen kombiniert und ein äußerst zufriedenstellendes Endprodukt hergestellt.

Es kann kontinuierlich und schnell gearbeitet werden, ohne daß ein Vorbereiten der Eisen- oder Stahloberfläche durch Sandstrahlen erforderlich ist. Ein Abrutschen der Beschichtung ist ausgeschlossen, da die noch nicht abgebundene Masse durch die Fasern eine filzartige Struktur erhält und dadurch stabilisiert wird. Das Band selbst gibt einen weiteren Halt. Der Auftrag der Masse kann sehr gleichmäßig erfolgen, so daß eine im wesentlichen einheitliche Schichtdicke der Ummantelung oder Beschichtung gewährleistet ist. Ein Materialverlust ist ebenfalls ausgeschaltet, da ein solcher bereits durch die Zubereitung der hydraulisch abbindenden Masse sowie durch die Verwendung eines Bandes verhindert wird. Die noch weiche hydraulisch abbindende Masse — aber auch die gehärtete oder abgebundene Masse — ist vorzugsweise fugendicht vom Band umschlossen, so daß eine glatte Außenhaut um die Beschichtung gelegt ist.

Das Band erfüllt demnach nicht nur beim Aufbringen der Ummantelung eine wichtige Aufgabe, sondern auch nach Fertigstellung des Schutzmantels aus hydraulisch abbindenden Massen, und zwar als schützende Außenhaut, die unter anderem auch eine vollständige Hydratation der Masse sicherstellt. Das bedeutet, daß auch auf diese Weise ein Schwinden der hydraulisch abbindenden Masse unterdrückt wird und Rißbildungen nicht zu befürchten sind. Das Band als Transportmittel für die Beschichtungsmasse sorgt für einen glatten kontinuierlichen Verfahrensablauf. Das Verfahren selbst erfordert nur geringe Investitionskosten und die Materialkosten beschränken sich auf ein Minimum, da kein Verlust auftritt. Es ist möglich, durch entsprechendes Einstellen der Masse, beispielsweise durch Verwendung von schnell erhärtenden Zementen, kurze Taktzeiten und damit ein zeitsparendes Arbeiten aufrechtzuerhalten. Die Fertigung ist an jedem Ort, beispielsweise auch im Freien möglich.

Eine mit dem erfindungsgemäßen Verfahren hergestellte Beschichtung weist aufgrund der vollständigen Hydratation und der durch die Mineralfasern erreichte Verfilzung optimale Festigkeit auf. Diese Tatsache wirkt sich insbesondere bei dünner Beschichtung sehr vorteilhaft aus. Sie erfüllt alle an einen solchen Schutzmantel gestellten Forderungen in hohem Maß. Sie bietet absoluten Korrosionsschutz,

3

da keinerlei makroskopische Riß- und Schadstellen in der abgebundenen Masse irgendwelche Angriffspunkte bieten; sie weist die der hydraulisch abgebundenen Masse eigenen Schlag- und Druckfestigkeiten auf; sie haftet fest an der Oberfläche bzw. dem Rohrmantel und sie ist abrieb- und frostbeständig. Ein wesentliches Merkmal besteht auch in der kontrollierten Gleichmäßigkeit der aufgetragenen Schutzschicht. Nicht zu unterschätzen sind die allgemeinen Vorteile, die durch erfindungsgemäße Beschichtungen von Rohren erreicht werden. So kann beispielsweise die Wanddicke des Rohres selbst verringert werden, weil die Korrosionszuschläge abgebaut werden können. Die Beschichtung führt zur Erhöhung des Trägheitsmomentes. Dies hat zur Folge, daß die Ovalität verringert und die mechanischen Eigenschaften verbessert werden. Die Ansprüche an die Rohroberfläche können herabgesetzt werden. Falls erforderlich, kann die Beschichtung einfach kalibriert werden.

Es ist auch möglich, geschnittene Rohre einzubauen. Ferner wird die Anpassung des Außendurchmessers eines Rohres an durch mechanische Verbindungsmittel, z. B. Fittings, auftretende Zwangsbedingungen durch die Wahl der Dicke der Beschichtung ermöglicht. Der Einbau solcher Rohre ist unproblematisch. Die erfindungsgemäße Beschichtungstechnik läßt sich ohne Schwierigkeit auf verschieden gestaltete Formstücke übertragen.

Bei einem besonders wirtschaftlichen, sauberen und daher zweckmäßigen Verfahren wird die hydraulisch abbindende Masse beispielsweise durch ein PE-Band oder ein bituminiertes Glasvlies dem zu beschichtenden oder zu ummantelnden Rohr zugeführt, das horizontal und frei liegt und um seine Rohrachse gedreht wird. Die auf entsprechende Konsistenz und zweckmäßig auf eine gewisse Eigenhaftfähigkeit eingestellte Masse, beispielsweise Feinbeton, wird maßgerecht, durch einen Aufgabetrichter, unmittelbar vor dem zu ummantelnden Rohr auf das Band aufgebracht und damit um das Rohr gewickelt und angedrückt werden. Das Umwickeln wird dabei so durchgeführt, daß die aufgebrachte hydraulisch abbindende Masse auf dem Rohrmantel eine durchgehende Schicht bildet. Das Band oder die Folie ist zweckmäßig etwa 10 bis 20 mm breiter als die darauf aufgetragene und damit transportierte Beschichtungsmasse. Beim Wickeln des so beschichteten Bandes werden dann die Stoßfugen der Beschichtung auf dem Rohrmantel durch Randstreifen des Bandes überdeckt, so daß auch an diesen Stellen ein Verdunsten von Wasser verhindert wird. Der Anpreßdruck der Masse kann über die Vorspannung des Bandes oder beispielsweise durch eine radial angeordnete Anpreßwalze erfolgen. Dadurch wird einerseits eine gute Haftung zwischen der Beschichtung und dem Rohrmantel erzielt und andererseits werden die Stoßstellen miteinander verbunden.

Irgendein handelsüblicher Kleber kann zwischen die hydraulisch abbindende Beschichtungsmasse und das Band oder die Folie eingebracht werden, um von vornherein zwischen diesen beiden Stoffen eine Haftung zu erreichen.

Durch Verwendung von schnell erhärtenden Zementen beim Einstellen der Beschichtungsmasse kann der Verfahrensablauf einschließlich der Abbindezeit und damit des Erhärtens wesentlich beschleunigt werden. Dies ist ein Vorteil, der sich besonders günstig im Hinblick auf die Stapelfähigkeit der ummantelten Rohre auswirkt.

In der folgenden Tabelle 1 ist der Aufbau einiger Mischungen angegeben, die sich zur Durchführung des Verfahrens als sehr geeignet erwiesen habe.

Tabelle 1

Aufbau der Masse

| Mischung | Zementart | Zement : Sand : Wasser Mischungsverh. GT | Fasergehalt Vol.-% | Dispersion Gew.-% auf Zement |
|---|---|---|---|---|
| 1 | PZ 55 | 1 : 1 : 0,50 | 1,5 | 0,1 |
| 2 | PZ 55 | 1 : 1 : 0,50 | 2,0 | — |
| 3 | SZ 45 | 1 : 1 : 0,45 | 1,5 | 0,1 |
| 4 | SZ 45 | 1 : 1 : 0,45 | 2,0 | — |

Einige Daten der mit den Mischungen erzielten Eigenschaften sind in der folgenden Tabelle 2 angegeben.

# 0 017 220

Tabelle 2

Daten der Masse

| Mischung | Transportfestigkeit, erreicht nach Stunden | nach 28 Tagen Druckfestigkeit, N/mm² | Schlagfestigkeit, KJ/m² | Bruchdeh- nung % |
|---|---|---|---|---|
| 1 | 8 | 62 | 12 | 4 |
| 2 | 6 | 58 | 13 | 3 |
| 3 | 1/2 | 52 | 11 | 5 |
| 4 | 1/2 | 49 | 10 | 4 |

**Patentansprüche**

1. Verfahren zum Beschichten und Ummanteln eines Rohres mit einer hydraulisch abbindenden Masse mit Hilfe eines Bandes, dadurch gekennzeichnet, daß man die noch nicht abgebundene Masse aus rasch härtendem Zement, alkaliwiderstandsfähigen Mineralfasern in Form von Schnitzeln sowie Zuschlägen und gegebenenfalls Zusatzmitteln, maßgerecht durch einen Aufgabetrichter unmittelbar vor dem zu ummantelnden sich drehenden Rohr auf das Band aufbringt und mit dem gespannten Band um das Rohr wickelt und andrückt.

2. Verfahren nach Anspruch 1, dadurch gekennzeichnet, daß als rasch härtender Zement ein Portlandzement mit beschleunigenden Zusätzen oder ein mit $C_{11}A_7 \cdot CaF_2$ modifizierter Portlandzement mit den Eigenschaften eines Schnellzements verwendet wird.

3. Verfahren nach den Ansprüchen 1 und 2, dadurch gekennzeichnet, daß der Faseranteil der hydraulisch abbindenden Masse 1,5 bis 2 Vol.-% beträgt.

4. Verfahren nach einem der Ansprüche 1 bis 3, dadurch gekennzeichnet, daß als Fasern Glasfasern verwendet werden.

5. Verfahren nach den Ansprüchen 1 bis 4, dadurch gekennzeichnet, daß der hydraulisch abbindenden Masse Zusatzmittel wie Kunstharzdispersionen und Verflüssiger zugegeben werden.

6. Verfahren nach Anspruch 1, dadurch gekennzeichnet, daß die Beschichtung aus der hydraulisch abgebundenen Masse mit organischen, gegebenenfalls faserverstärkten Stoffen oberflächlich beschichtet wird und diese Schicht gegebenenfalls lösbar ist.

7. Verfahren nach Anspruch 1, dadurch gekennzeichnet, daß ein Rohr aus Stahl, Gußeisen, Beton, Asbestzement, Steingut oder Kunststoff verwendet wird.

8. Verfahren nach Anspruch 1 bis 7, dadurch gekennzeichnet, daß das Band als äußere verlorene oder lösbare Schalung bzw. Formwand für den Guß der Ummantelung verwendet wird.

9. Verfahren nach den Ansprüchen 1 bis 8, dadurch gekennzeichnet, daß das Band aus einem impermeablen Material besteht.

10. Verfahren nach den Ansprüchen 1 bis 9, dadurch gekennzeichnet, daß zur Erhöhung der Zugfestigkeit und der Schlagzähigkeit das Band durch Fasern verstärkt wird.

11. Verfahren nach Anspruch 1, dadurch gekennzeichnet, daß zur Erhöhung der Haftung zwischen dem Band und der hydraulisch gebundenen Masse ein Kleber eingebracht wird.

**Claims**

1. A method for coating and enveloping a pipe with a hydraulic setting mass with the aid of a tape, characterized in that the not yet set mass of quick setting cement, alkali resistant mineral fibres in the form of cuttings, as well as additives and if desired additional substances, is applied in the appropriate amount on to the tape by a supply hopper directly before the winding on to the rotating pipe, and is wound on to and pressed on to the pipe by the tensioned tape.

2. A method according to claim 1, characterized in that a portland cement with accelerating additives or a portland cement modified with $C_{11}A_7 \cdot CaF_2$ with the characteristics of a quick cement, is used as the quick setting cement.

3. A method according to claims 1 and 2, characterized in that the fibre proportion amounts to 1,5 to 2 vol.-% of the hydraulic setting mass.

4. A method according to one of claims 1 to 3, characterized in that glass fibres are used as the fibres.

5. A method according to claims 1 to 4, characterized in that additive substances such as synthetic resin dispersions and liquifiers are added to the hydraulic setting mass.

6. A method according to claim 1, characterized in that the coating of the hydraulic setting mass is

5

coated on its surface with organic, possibly fibre-reinforced substances, and this coating is possibly soluble.

7. A method according to claim 1, characterized in that a pipe of steel, cast iron, conrete, asbestos cement, stoneware or plastics is used.

8. A method according to claims 1 to 7, characterized in that the tape is used as an externally wasted or soluble mould or form for the casting of the envelope.

9. A method according to claims 1 to 8, characterized in that the tape consists of an impermeable material.

10. A method according to claims 1 to 9, characterized in that for increasing the tensional strength and impact strength, the tape is reinforced with fibres.

11. A method according to claim 1, characterized in that for increasing the adherence between the tape and the hydraulic setting mass, an adhesive is introduced.

## Revendications

1. Procédé pour enduire et pour enrober un tuyau d'une masse à prise hydraulique, à l'aide d'une bande, caractérisé en ce que l'on dépose sur la bande, en proportions convenables, par une trémie de chargement directement devant le tuyau tournant à enrober, la masse qui n'est pas encore prise et qui est constituée de ciment à durcissement rapide, de fibres minérales sous forme de rognures, ainsi que d'agrégats et, le cas échéant, d'adjuvants, et on l'enroule et on l'applique par compression autour du tuyau, avec la bande tendue.

2. Procédé suivant la revendication 1, caractérisé en ce qu'il consiste à utiliser comme ciment à durcissement rapide un ciment de Portland, avec des additifs accélérateurs, ou un ciment de Portland modifié par du $C_{11}A_7 \cdot CaF_2$, ayant les propriétés d'un ciment rapide.

3. Procédé suivant les revendications 1 et 2, caractérisé en ce que la proportion de fibres représente de 1 à 2% en volume de la masse à prise hydraulique.

4. Procédé suivant l'une des revendications 1 à 3, caractérisé en ce qu'il consiste à utiliser comme fibres des fibres de verre.

5. Procédé suivant les revendications 1 à 4, caractérisé en ce qu'il consiste à ajouter à la masse à prise hydraulique des adjuvants, comme des dispersions de résines en matière plastique, et des fluidifiants.

6. Procédé suivant la revendication 1, caractérisé en ce qu'il consiste à enduire l'enrobage constitué de la masse prise hydrauliquement de substances organiques éventuellement renforcées par des fibres, cette couche en substances organiques étant, le cas échéant, détachable.

7. Procédé suivant la revendication 1, caractérisé en ce qu'il consiste à utiliser un tuyau en acier, en fonte, en béton, en amiante-ciment, en grès ou en matière plastique.

8. Procédé suivant les revendications 1 à 7, caractérisé en ce qu'il consiste à utiliser la bande comme coffrage ou comme paroi de moule extérieur perdue ou amovible pour la coulée de l'enrobage.

9. Procédé suivant les revendications 1 à 8, caractérisé en ce que la bande est en un matériau imperméable.

10. Procédé suivant les revendications 1 à 9, caractérisé en ce qu'il consiste, pour augmenter la résistance à la traction et la résistance aux chocs, à renforcer la bande par des fibres.

11. Procédé suivant la revendication 1, caractérisé en ce qu'il consiste, pour augmenter l'adhérence, à appliquer une colle entre la bande et la masse prise par voie hydraulique.